# EUROPÄISCHE PATENTSCHRIFT

(11) **EP 0 828 639 B1**
(45) Veröffentlichungstag und Bekanntmachung des Hinweises auf die Patenterteilung: **20.01.1999**
(21) Anmeldenummer: 95942063.9
(22) Anmeldetag: 13.11.1995
(51) Int. Cl.: B60S 3/00

(54) **VERFAHREN UND ANLAGE ZUR BEHANDLUNG VON FAHRZEUGEN**
VEHICLE TREATMENT PROCESS AND INSTALLATION
PROCEDE ET INSTALLATION POUR LE TRAITEMENT DE VEHICULES

(30) Priorität: 11.11.1994 DE 9418080 U; 11.11.1994 DE 9418084 U
(43) Veröffentlichungstag der Anmeldung: 18.03.1998
(73) Patentinhaber: Seibusch, Wilhelm, 81377 München (DE)
(72) Erfinder: Seibusch, Wilhelm, 81377 München (DE)
(74) Vertreter: Ernicke, Hans-Dieter, Dipl.-Ing.
(86) Internationale Anmeldenummer: EP9504448
(87) Internationale Veröffentlichungsnummer: WO9615013

(56) Entgegenhaltungen:
- EP-A- 0 436 090
- WO-A-93/21045
- DE-A- 3 540 335
- DE-C- 4 038 305
- GB-A- 1 407 894
- US-A- 3 796 925
- US-A- 4 135 533
- REVUE TECHNIQUE AUTOMOBILE, Bd. 47, Nr. 540, 1.Juni 1992 BOUL.BILLANCOURT (FR), Seiten LV-LXII, XP 000278302 'LES PORTIQUES DE LAVAGE PRESERVER LA CARROSSERIE, ECONOMISER L'EAU'

## Beschreibung

Die Erfindung betrifft ein Verfahren und eine Anlage zur Behandlung von Fahrzeugen mit den Merkmalen im Oberbegriff des Hauptanspruchs.

Eine solche Anlage nebst Behandlungsverfahren ist in Form einer Autowaschanlage mit einer Abwasserreinigung aus der US-A-4,135,533 bekannt. Sie besitzt eine Waschvorrichtung, z.B. Sprühdüsen, mit denen Waschwasser aufgetragen wird. Das verschmutzte Abwasser wird aufgefangen, gereinigt, wieder aufbereitet, mit Frischwasser ergänzt und in einen großvolumigen Versorgungstank zwischengespeichert. Bei Bedarf wird das regenerierte Waschwasser dem Waschprozeß wieder zugeführt. Dem Waschwasser wird ein Reinigungsmittel in Abhängigkeit von der in Brauchwasser noch vorhandenen Restkonzentration beigegeben. Die Restkonzentration wir über einen Sensor in der Rücklaufleitung vor den Versorgungstank gemessen. Die Zugabe des Reinigungsmittels erfolgt in den Versorgungstank. In Stillstandszeiten der Waschanlage wird die große gespeicherte Waschwassermenge über einen Bypass periodisch umgewälzt und durch konzentrationsabhängige Zugabe von Reinigungsmittel aufgefrischt. Diese Abordnung hat den Nachteil, daß eventuelle Veränderungen des Wasch- oder Behandlungswassers im Versorgungstank zwischen den Umwälzungen nicht gezielt und zeitgerecht erfaßt werden können. Dies ist vor allem für solche Behandlungssubstanzen ungünstig, die sich mit der Zeit verändern können. Das sind insbesondere biologisch abbaubare Tenside. Dadurch läßt sich die benötigte Reinigungsmittelkonzentration für den Waschprozeß nicht immer optimal einstellen. Außerdem wird durch die Umwälzungen in Stillstandszeiten unnötig Reinigungsmittel verbraucht.

Die DE-A-40 40 007 zeigt eine andere Waschanlage konventioneller Bauart in Form einer Selbstbedienungsanlage. In der Praxis werden hier die Waschsubstanzen in stets gleich bleibenden Mengen durch Sprüheinrichtungen oder dergleichen beigegeben. Diese Vorgehensweise führt zu einem unnötig hohen Verbrauch und kann problematisch sein, insbesondere wenn biologisch abbaubare Tenside als Waschsubstanz Verwendung finden.

Die EP-A-0 436 090 befaßt sich mit dem Problem, die Reinigung des Abwassers und den Abscheideprozeß von Verschmutzungen in Abwasser zu verbessern. Hierbei werden dem Abwasser Flockungsmittel, Adsorptionsmittel und Luft beigegeben und in den Schlammfang gepumpt. Auch die DE-C-40 38 305, die DE-A 35 40 335, die WO 93/21045 und die GB-A 1 407 894 sowie die Literaturstelle "LES PORTIQUES DE LAVAGE" konzentrieren sich auf die Abwasserreinigung, haben aber nichts mit der Zugabe von Behandlungssubstanzen für die Fahrzeugreinigung bzw. Fahrzeugbehandlung zu tun. Die US-A-3,796,925 zeigt eine Ventilsteuerung und offenbart Details zur Ausbildung eines Meß-und Steuersystems für Flüssigkeitsleitwerte allgemeiner Art.

Es ist daher Aufgabe der vorliegenden Erfindung, eine bessere Behandlungsanlage und ein zugehöriges Behandlungsverfahren aufzuzeigen.

Die Erfindung löst diese Aufgabe mit den Merkmalen im Verfahrens- und Vorrichtungshauptanspruch.

Die frischen Behandlungssubstanz(en) für die Fahrzeugwäsche und/oder -politur werden nach Bedarf gezielt für den Behandlungsprozeß in den Vorlauf beigegeben und nachdosiert. In der Behandlungsflüssigkeit ist nach der Wäsche und/oder Politur noch eine unverbrauchte Restkonzentration und/oder Restaktivität der Behandlungssubstanz(en) vorhanden, die für den nächsten Behandlungsprozeß genutzt werden kann.

Die in Abhängigkeit von der aktuellen Konzentration und/oder Aktivität der Behandlungssubstanz(en) im Filtratbecken betätigbare oder steuerbare Dosiervorrichtung erlaubt es, die Behandlungssubstanz(en) optimal auszunutzen und nur soviel wie nötig für den Behandlungsvorgang beizugeben. Überdosierungen und Unterdosierungen sind insbesondere für einen Waschprozeß gleichermaßen ungünstig und werden mit der Erfindung vermieden. Besonders vorteilhaft ist dies in Verbindung mit Waschsubstanzen, insbesondere Tensiden, und deren Zugabe ins Waschwasser. Ein anderer Einsatzbereich liegt z.B. bei Spülmitteln oder Trockenhilfen und deren Beigabe ins Spülwasser.

Die Erfindung ist vor allem in Verbindung mit biologisch abbaubaren Behandlungs- bzw. Waschsubstanzen, z.B. Tensiden, vorteilhaft, weil sich deren Konzentration und Waschaktivität mit der Zeit verändert. Im Dauerbetrieb kann die Waschaktivität besser ausgenutzt werden, wodurch nur eine geringe Nachdosierung erforderlich ist. Entstehen hingegen längere Pausen zwischen den Waschvorgängen und sinkt demzufolge die Konzentration bzw. Waschaktivität, kann entsprechend mehr an Waschsubstanz(en) beigegeben werden.

Die Erfindung hat nicht nur für die Optimierung und möglichst wirtschaftliche Ausnutzung der Behandlungs- bzw. Waschsubstanz(en) Vorteile. Ein günstiger Einfluß ergibt sich auch für das Abwasser, dessen Gehalt an abzubauenden Stoffen durch die optimierte Substanzenzufuhr möglichst niedrig gehalten werden kann. Die Abwasseroptimierung ist mit Hinblick auf die steigenden Umweltanforderungen an Wasch- und Polieranlagen von hoher Bedeutung.

Zur Steuerung der Dosiervorrichtung ist eine geeignete Meßvorrichtung vorgesehen, die aus ein oder mehreren Komponenten bestehen kann und an geeigneter Stelle im Filtratbecken angeordnet ist. Sie ist über eine Steuerung mit der Dosiervorrichtung verbunden. Die Meßvorrichtung kann die Konzentration der Behandlungs- bzw. Waschsubstanz(en) unmittelbar oder mittelbar, z.B. über den PH-Wert, messen.

Vorteilhaft ist es, wenn die Meßvorrichtung zusätzlich noch andere Schadstoffe messen kann, was z.B. über den Sauerstoffgehalt möglich ist. Hierdurch kann einer Aufsalzung durch Flockungsmittel, Salze allgemein oder dergleichen begegnet werden und die Abwasser-Kontrolle noch weiter optimiert werden.

Die Erfindung erlaubt es, die Behandlungssubstanz(en) an geeigneter Stelle in den Wasserkreislauf einzuspeisen. Bei einer Wasch- oder Polieranlage mit einer Aufbereitung und Wiederverwendung des Abwassers empfiehlt sich die Anordnung der Dosiervorrichtung im Vorlauf zwischen Filtratbecken und Behandlungsvorrichtung oder an der der Behandlungsvorrichtung.

Günstig auf die Umweltbilanz wirken sich ferner die Mengenbegrenzung der Behandlungsflüssigkeit und deren ständige Umwälzung mit Filtrierung und Belüftung aus. Die Flüssigkeitsmenge ist im wesentlichen für die Wäsche nur eines oder einiger weniger Fahrzeuge bemessen.

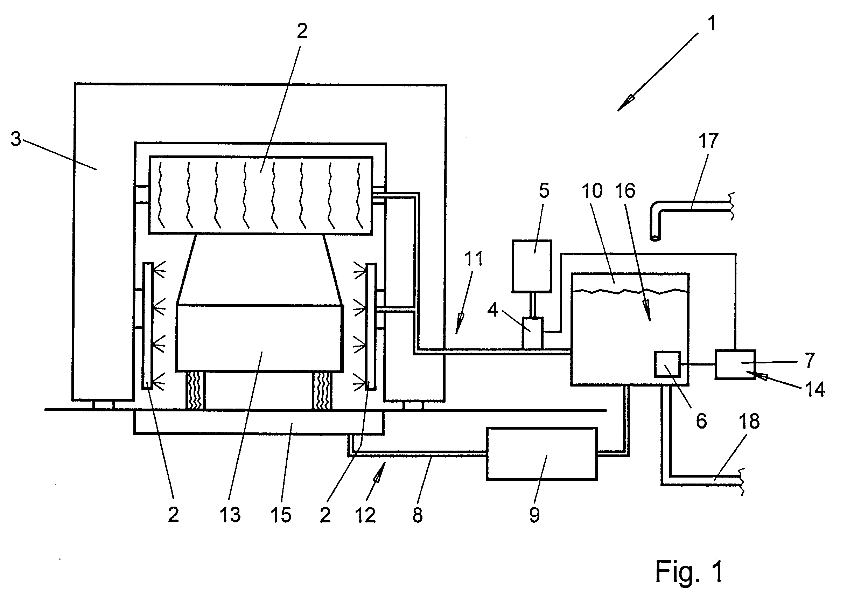

Die Erfindung ist in der Zeichnung beispielsweise und schematisch anhand einer Fahrzeugbehandlungsanlage (1), hier einer Waschanlage, dargestellt. Es kann sich alternativ auch um eine Polieranlage oder dgl. handeln.

Die Waschanlage (1) besteht aus einem stationären oder fahrbaren Portal (3), in dem ein oder mehrere Vorrichtungen (2) zur Behandlung eines Fahrzeugs (13) angeordnet sind. Vorzugsweise handelt es sich hierbei um Waschvorrichtungen. Die Waschvorrichtungen (2) können in beliebiger Zahl und Ausgestaltung vorhanden sein, z.B. als Waschbürsten, Hochdruckdüsen, Handlanzen oder dergleichen. In diesem Zusammenhang sind beliebige Waschvorrichtungen einsetzbar. Die Waschanlage (1) kann außer den Waschvorrichtungen (2) weitere Behandlungsaggregate aufweisen, z.B. Spülvorrichtungen, Konservierungsvorrichtungen, Poliereinrichtungen, Trockner oder dergleichen.

Die in der Waschanlage (1) anfallende Behandlungsflüssigkeit, insbesondere das Waschwasser, wird in einer bodenseitigen Auffangwanne (15) gesammelt und in einem Rücklauf (12) über Leitungen (8) einer Aufbereitungsvorrichtung (9) und danach einem Filtratbecken (10) zugeführt. Die Aufbereitungsvorrichtung (9) kann in geeigneter Weise ein- oder mehrstufig ausgestaltet sein. Sie reinigt das Abwasser von Verschmutzungen. Z.B. können ein oder mehrere Filter, Sedimentationsbecken, Flockungsanlagen und sonstige Einrichtungen zur Reinigung und Aufbereitung des Abwassers zum Einsatz kommen.

Vorzugsweise wird das Abwasser nur durch Filtration gereinigt, wobei es ständig in Bewegung gehalten und dabei auch durch Düsen oder dgl. mit Umgebungsluft belüftet wird. Sedimentationsbecken, Flockungsanlagen und andere Einrichtungen, in denen das Abwasser zum Stillstand kommt, werden vorzugsweise vermieden.

Das gereinigte und wiederverwendbare Abwasser wird als Filtrat bezeichnet. Es wird mit Frischwasser nach Bedarf ergänzt und dient als Behandlungswasser. Von Filtratbecken (10) gelangt es wiederum über Leitungen (8) zu den verschiedenen Waschvorrichtungen (2). Für den Wassertransport sind geeignete Pumpen (nicht dargestellt) vorgesehen. Das Filtrat bzw. Behandlungswasser kann auch im Kreislauf ständig oder immer wieder über die Filter umgepumpt werden.

Dem Behandlungswasser werden ein oder mehrere Behandlungssubstanzen für die Fahrzeugbehandlung beigegeben. Im gezeigten Ausführungsbeispiel handelt es sich um Waschsubstanzen, insbesondere Tenside, die dem Waschwasser zum Reinigen des Fahrzeugs (13) zugeführt werden.

Die Beigabe erfolgt mittels einer steuerbaren Dosiervorrichtung (4). Werden verschiedene Waschsubstanzen zugeführt, kann die Dosiervorrichtung (4) mehrere getrennt steuerbare Einzelmodule aufweisen. Die Dosiervorrichtung (4) kann in geeigneter Weise als Membranpumpe oder dergleichen ausgebildet sein.

Die Dosiervorrichtung (4) ist in Abhängigkeit von der Konzentration des oder Waschsubstanz(en) bzw. der Waschaktivität im aufbereiteten Behandlungswasser betätigbar. Dadurch wird oder werden nur soviel frische Waschsubstanz(en) beigegeben bzw. nachdosiert, wie der jeweilige Behandlungsvorgang erfordert.

Für die Ermittlung der Konzentration bzw. Waschaktivität sind ein oder mehrere Meßvorrichtungen (6) vorgesehen, die die Konzentration bzw. Waschaktivität direkt oder mittelbar messen. Die Meßvorrichtung (6) kann z.B. den PH-Wert im Waschwasser ermitteln, der einen unmittelbaren Indikator für die Waschaktivität und für die Waschmittelkonzentration darstellt. Die Meßvorrichtung (6) kann außerdem den Gehalt an anderen Schadstoffen ermitteln, indem z.B. der Salzgehalt, der Gehalt an Sauerstoff oder dergleichen gemessen wird.

Die Meßvorrichtung(en) (6) ist oder sind über eine geeignete Steuerung (7) mit der Dosiervorrichtung (4) verbunden. Die Steuerung (7) kann in die Meßvorrichtung (6) integriert sein. Die Meßvorrichtung (6) und/oder die Steuerung (7) haben eine Einrichtung (14) zur Speicherung und/oder Ausgabe der Meßwerte. Dies ermöglicht eine Kontrolle und Protokollierung der Meßergebnisse.

Die Meßvorrichtung(en) (6) ist beispielsweise im Filtratbecken (10) angeordnet. Das Fassungsvermögen des Filtratbeckens (10) ist vorzugsweise begrenzt und so bemessen, daß die Filtrat- und Waschwassermenge unter Berücksichtigung von Wasserverlusten, z.B. durch Verschleppung, Verdunstung, Kanalablaß etc., im wesentlichen für nur eine oder wenige Autowäschen ausreicht. Die kleine Menge kann auch leichter umgepumpt, gefiltert und in Bewegung gehalten werden.

Für die Messung des Schadstoffgehaltes im Abwasser kann eine geeignete Meßvorrichtung (6) alternativ oder zusätzlich auch im Bereich des Rücklaufs (12), z.B. in der Aufbereitungsvorrichtung (9), angeordnet sein.

Von der Aufbereitungseinrichtung (9) und/oder dem Filtratbecken (10) zweigt ein Ablauf (18) ab, der z.B. in die Kanalisation mündet. Teile des Abwassers oder des Filtrats können hier abgelassen werden. Über die Meßvorrichtung (6) ist eine Kontrolle der Wasserqualität des Abwassers und damit der Kanalbelastung möglich.

Die Dosiervorrichtung (4) ist am Vorlauf (11) oder an einer anderen Stelle zwischen Filtratbecken (10) und Waschvorrichtung (2) angeordnet. Es empfiehlt sich jedenfalls, die zugehörige Meßvorrichtung (6) in einem Bereich anzuordnen, wo sich die Qualität des Waschwassers und die Konzentration der Waschsubstanz(en) bzw. die Waschaktivität bis zum Erreichen der Waschvorrichtung (2) nicht mehr wesentlich ändern.

Wie aus der Zeichnung ersichtlich, ist zur Ergänzung der Waschwasserverluste ein Frischwasserzulauf (17) vorgesehen, der beispielsweise im Filtratbecken (10) mündet. Die Dosiervorrichtung (4) ist mit ein oder mehreren Vorratsbehältern (5) für ein oder mehrere Waschsubstanz(en) verbunden.

Abwandlungen des gezeigten Ausführungsbeispiels sind in verschiedener Weise möglich. Zum einen können die Fahrzeuge (13) auch mit einer entsprechend angepaßten Polieranlage (1) oder Wasch/Polieranlage behandelt werden. Dementsprechend sind auch die Aufbereitungsvorrichtung (9) und die anderen beschriebenen Komponenten geändert und angepaßt. Im bevorzugten Ausführungsbeispiel werden als Waschsubstanz biologisch abbaubare Tenside eingesetzt. Statt dessen können aber auch andere beliebig geeignete Behandlungssubstanzen, z.B. andere Wasch- oder Reinigungsmittel, Spülmittel, Trockenhilfen oder dgl. zum Einsatz kommen. Für verschiedene Behandlungssubstanzen können gemeinsame oder getrennte Wasserkreisläufe und Anordnungen der beschriebenen Art vorhanden sein.

### BEZUGSZEICHENLISTE

- 1: Behandlungsanlage, Waschanlage
- 2: Behandlungsvorrichtung, Waschvorrichtung
- 3: Portal
- 4: Dosiervorrichtung
- 5: Vorratsbehälter
- 6: Meßvorrichtung
- 7: Steuerung
- 8: Leitung
- 9: Aufbereitungsvorrichtung
- 10: Filtratbecken
- 11: Vorlauf
- 12: Rücklauf
- 13: Fahrzeug
- 14: Speicher- und/oder Ausgabeeinrichtung
- 15: Auffangwanne
- 16: Behandlungsflüssigkeit, Waschwasser
- 17: Frischwasserzulauf
- 18: Ablauf, Kanal

## Patentansprüche

1. Verfahren zum Behandeln, insbesondere Waschen und/oder Polieren, von Fahrzeugen (13) mit einer Behandlungsflüssigkeit (16), der eine oder mehrere Behandlungssubstanz/-en, insbesondere Tenside, für die Fahrzeugbehandlung beigegeben werden, wobei die Behandlungsflüssigkeit (16) aufgefangen, wieder aufbereitet, in einem Filtratbecken (10) gespeichert und erneut verwendet wird, wobei eine oder mehrere frische Behandlungssubstanz/-en der aufbereiteten Behandlungsflüssigkeit (16) in Abhängigkeit von der in ihr nach der Fahrzeugbehandlung noch vorhandenen Konzentration und/oder Aktivität der Behandlungssubstanz/-en dosiert beigegeben werden, dadurch **gekennzeichnet**, daß die Konzentration und/oder Aktivität der Behandlungssubstanz/-en in Filtratbecken (10) gemessen wird und die frische/-n Behandlungssubstanz/-en in den Vorlauf (11) zwischen Filtratbecken (10) und Behandlungsvorrichtung (2) beigegeben werden.

2. Verfahren nach Anspruch 1, dadurch **gekennzeichnet**, daß die in der Behandlungsvorrichtung (2) bevorratete Behandlungsflüssigkeit (16) auf die für eine oder wenige Fahrzeugbehandlungen benötigte Flüssigkeitsmenge begrenzt ist.

3. Verfahren nach Anspruch 1, 2 oder 3, dadurch **gekennzeichnet**, daß die Behandlungsflüssigkeit (16) ständig in Bewegung gehalten, durch Filterung gereinigt und in der Bewegung belüftet wird.

4. Anlage zum zum Behandeln, insbesondere Waschen und/oder Polieren, von Fahrzeugen (13), mit einer Einrichtung (8,9) zum Rückführen und Aufbereiten der Behandlungsflüssigkeit (16) und einer steuerbaren Dosiervorrichtung (4) für die Zufuhr von frischen Behandlungssubstanzen, insbesondere Tensiden, für die Fahrzeugbehandlung, wobei in Kreislauf der Behandlungsflüssigkeit (16) eine Meßvorrichtung (6) für die Konzentration der Behandlungssubstanzen in der aufbereiteten Behandlungsflüssigkeit (16) angeordnet ist, die über eine Steuerung (7) mit der Dosiervorrichtung (4) verbunden ist, dadurch **gekennzeichnet**, daß die Meßvorrichtung (6) im Filtratbecken (10) angeordnet ist und die Dosiervorrichtung (4) im Zulauf (11) oder an der Behandlungsvorrichtung (2) angeordnet ist.

5. Anlage nach Anspruch 4, dadurch **gekennzeichnet**, daß die Dosiervorrichtung (4) für Waschsubstanz/-en und deren Beigabe ins Waschwasser (16) vorgesehen ist.

6. Anlage nach Anspruch 4 oder 5, dadurch **gekennzeichnet**, daß die Meßvorrichtung (6) die Konzentration der Behandlungssubstanzen, insbesondere der Waschsubstanz/-en, unmittelbar oder mittelbar mißt.

7. Anlage nach Anspruche 4, 5 oder 6, dadurch **gekennzeichnet**, daß die Meßvorrichtung (6) zusätzlich andere Schadstoffe mißt.

8. Anlage nach einem der Ansprüche 4 bis 7, dadurch **gekennzeichnet**, daß die Meßvorrichtung (6) und/oder die Steuerung (7) eine Einrichtung (14) zur Speicherung und/oder Ausgabe der Meßwerte aufweist.

9. Anlage nach einem der Ansprüche 4 bis 8, dadurch **gekennzeichnet**, daß das Fassungsvermögen des Filtratbeckens (10) im wesentlichen auf die für eine oder wenige Fahrzeugwäschen benötigte Menge von Behandlungsflüssigkeit (16) bemessen ist.

10. Anlage nach einem der Ansprüche 4 bis 9, dadurch **gekennzeichnet**, daß ein oder mehrere zusätzliche Meßvorrichtungen (6) im Filtratbecken und/oder im Bereich des Rücklaufs (12) angeordnet sind.

## Claims

1. Process for treating, in particular washing and/or polishing, vehicles (13) with a treatment liquid (16) which has one or more treatment substances, in particular surfactants, for the vehicle treatment added to it, it being the case that the treatment liquid (16) is collected, reprocessed, stored in a filtrate container (10) and reused, and it being the case that one or more fresh treatment substances are added to the processed treatment liquid (16) in a metered manner in dependence on the treatment-substance activity and/or concentration still present in the treatment liquid once the vehicle has been treated, characterized in that the concentration and/or activity of the treatment substances in the filtrate container (10) is measured, and the fresh treatment substances are added into the flow section (11) between the filtrate container (10) and the treatment arrangement (2).

2. Process according to Claim 1, characterized in that the treatment liquid (16) which is stored in the treatment arrangement (2) is restricted to that quantity of liquid which is required for one or a small number of vehicle treatments.

3. Process according to Claim 1, 2 or 3, characterized in that the treatment liquid (16) is kept in constant motion, cleaned by filtering and aerated as it moves.

4. Installation for treating, in particular washing and/or polishing, vehicles (13), having an arrangement (8, 9) for returning and processing the treatment liquid (16), and having a controllable metering device (4) for the feed of fresh treatment substances, in particular surfactants, for the vehicle treatment, there being arranged in the circuit for the treatment liquid (16) a device (6) for measuring the concentration of the treatment substances in the processed treatment liquid (16), said measuring device being connected to the metering device (4) via a control means (7), characterized in that the measuring device (6) is arranged in the filtrate container (10), and the metering device (4) is arranged in the flow section (11) or on the treatment arrangement (2).

5. Installation according to claim 4, characterized in that the metering device (4) is provided for washing substances and for adding the latter into the washing water (16).

6. Installation according to Claim 4 or 5, characterized in that the measuring device (6) measures the concentration of the treatment substances, in particular of the washing substances, directly or indirectly.

7. Installation according to Claim 4, 5 or 6, characterized in that the measuring device (6) additionally measures other contaminants.

8. Installation according to one of Claims 4 to 7, characterized in that the measuring device (6) and/or the control means (7) have/has a device (14) for storing and/or outputting the measured values.

9. Installation according to one of Claims 4 to 8, characterized in that the capacity of the filtrate container (11) is designed essentially for that quantity of treatment liquid (16) which is required for one or a small number of vehicle washers.

10. Installation according to one of Claims 4 to 9, characterized in that one or more additional measuring devices (6) are arranged in the filtrate container and/or in the region of the return section (12).

## Revendications

1. Procédé pour traiter, notamment pour laver et/ou pour faire briller des véhicules (13) automobiles par un liquide (16) de traitement auquel on ajoute une ou plusieurs substances de traitement, notamment des tensioactifs, destinées au traitement de véhicule automobile, le liquide (16) de traitement étant récupéré, repréparé, accumulé dans un récipient (10) pour filtrat et réutilisé, une substance de traitement fraîche ou plusieurs substances de traitement fraîches étant ajoutées de manière dosée au liquide (16) de traitement repréparé en fonction de la concentration et/ou de l'activité de la substance de traitement ou des substances de traitement qui y sont encore présentes après le traitement du véhicule automobile, caractérisé en ce que la concentration et/ou l'activité de la substance de traitement ou des substances de traitement dans le récipient (10) pour filtrat est mesurée et en ce que la substance de traitement fraîche ou les substances de traitement fraîches sont ajoutées dans la conduite (11) d'alimentation entre le récipient (10) pour filtrat et le dispositif (2) de traitement.

2. Procédé suivant la revendication 1, caractérisé en ce que le liquide (16) de traitement mis en réserve dans le dispositif (2) de traitement est limité à la quantité de liquide nécessaire pour un traitement de véhicule automobile ou pour un petit nombre de traitements de véhicule automobile.

3. Procédé suivant la revendication 1, 2 ou 3, caractérisé en ce que le liquide (16) de traitement est maintenu constamment en mouvement, nettoyé par filtration et aéré en mouvement.

4. Installation pour traiter, notamment pour laver et/ou pour faire briller, des véhicules (13) automobiles, comportant un dispositif (8,9) pour renvoyer et repréparer le liquide (16) de traitement et un dispositif (4) de dosage pouvant être commandé pour l'envoi de substances de traitement fraîches, notamment de tensioactifs, pour le traitement du véhicule automobile, un dispositif (6) de mesure de la concentration de la substance de traitement ou des substances de traitement dans le liquide (16) de traitement repréparé étant monté dans le circuit du liquide (16) de traitement, ce dispositif de mesure étant relié par l'intermédiaire d'une commande (7) au dispositif (4) de dosage, caractérisée en ce que le dispositif (6) de mesure est monté dans le récipient (10) pour le filtrat et en ce que le dispositif (4) de dosage est monté dans la conduite (11) d'arrivée ou sur le dispositif (2) de traitement.

5. Installation suivant la revendication 4, caractérisée en ce que le dispositif (4) de dosage est prévu pour la substance de lavage ou les substances de lavage et pour leur ajout à l'eau (16) de lavage.

6. Installation suivant la revendication 4 ou 5; caractérisée en ce que le dispositif (6) de mesure mesure directement ou indirectement la concentration de la substance ou des substances de traitement, notamment de la substance ou des substances de lavage.

7. Installation suivant les revendications 4, 5 ou 6, caractérisée en ce que le dispositif (6) de mesure mesure de plus d'autres substances nocives.

8. Installation suivant l'une des revendications 4 à 7, caractérisée en ce que le dispositif (6) de mesure et/ou la commande (7) comportent un dispositif (14) pour enregistrer et/ou sortir les valeurs de mesure.

9. Installation suivant l'une des revendications 4 à 8; caractérisée en ce que la capacité du récipient (10) pour le filtrat est réglée sensiblement sur une quantité de liquide (16) de traitement nécessaire pour un lavage de véhicule automobile ou pour un petit nombre de lavages de véhicule automobile.

10. Installation suivant l'une des revendications 4 à 9, caractérisée en ce qu'il est monté un ou plusieurs dispositifs (6) de mesure supplémentaire dans le récipient pour le filtrat et/ou dans la partie de la conduite (12) de renvoi.
